(19) Europäisches Patentamt
European Patent Office
Office européen des brevets

(11) **EP 1 004 861 B1**

(12) **EUROPÄISCHE PATENTSCHRIFT**

(45) Veröffentlichungstag und Bekanntmachung des Hinweises auf die Patenterteilung:
**09.10.2002 Patentblatt 2002/41**

(51) Int Cl.[7]: **G01J 3/28**

(21) Anmeldenummer: **99122300.9**

(22) Anmeldetag: **09.11.1999**

(54) **Verfahren und Vorrichtung zum Bestimmen von Konzentrations- und Temperaturverteilungen von beliebigen, vorzugsweise gasförmigen Medien**

Method and device for determining the concentration- and temperature-distribution of any, preferably a gaseous, fluid

Procédé et dispositif pour déterminer la répartition de concentration et de température d'un milieu quelconque, de préférence gazeux

(84) Benannte Vertragsstaaten:
**DE ES IT**

(30) Priorität: **26.11.1998 DE 19854679**
**07.04.1999 DE 19915493**

(43) Veröffentlichungstag der Anmeldung:
**31.05.2000 Patentblatt 2000/22**

(73) Patentinhaber: **Deutsches Zentrum für Luft- und Raumfahrt e.V.**
**53175 Bonn (DE)**

(72) Erfinder:
• **Schimpf, Birger**
**82205 Gilching (DE)**
• **Schreier, Franz,Dr.**
**82152 Planegg (DE)**

(74) Vertreter: **von Kirschbaum, Albrecht, Dipl.-Ing.**
**Patentanwalt**
**Postfach 1520**
**82102 Germering (DE)**

(56) Entgegenhaltungen:
• D.Q. WARK E.A.: "NIMBUS SATELLITE INFRARED SPECTROMETER EXPERIMENT" IEEE TRANSACTIONS ON GEOSCIENCE ELECTRONICS., Bd. 8, Nr. 4, Oktober 1970 (1970-10), Seiten 264-270, XP002130600 IEEE INC. NEW YORK., US

• ALTHOUSE M L G: "CHEMICAL VAPOR DETECTION WITH A MULTISPECTRAL THERMAL IMAGER" OPTICAL ENGINEERING,US,SOC. OF PHOTO-OPTICAL INSTRUMENTATION ENGINEERS. BELLINGHAM, Bd. 30, Nr. 11, 1. November 1991 (1991-11-01), Seiten 1725-1732, XP000234518 ISSN: 0091-3286

• DUNLOP J D: "COMBINING SPECTRAL AND SPATIAL MODE IMAGERY FROM AN IMAGING SPECTROMETER" PROCEEDINGS OF THE INTERNATIONAL GEOSCIENCE AND REMOTE SENSING SYMPOSIUM. (IGARSS),US,NEW YORK, IEEE, Bd. SYMP. 12, 1989, Seiten 2077-2080, XP000139355

• BETREMIEUX Y ET AL: "SPINR: TWO-DIMENSIONAL SPECTRAL IMAGING THROUGH TOMOGRAPHIC RECONSTRUCTION" OPTICAL ENGINEERING,US,SOC. OF PHOTO-OPTICAL INSTRUMENTATION ENGINEERS. BELLINGHAM, Bd. 32, Nr. 12, 1. Dezember 1993 (1993-12-01), Seiten 3133-3138, XP000415650 ISSN: 0091-3286

• MOIRA HILTON ET AL: "QUANTITATIVE ANALYSIS OF REMOTE GAS TEMPERATURES AND CONCENTRATIONSFROM THEIR INFRARED EMISSION SPECTRA" MEASUREMENT SCIENCE AND TECHNOLOGY,GB,IOP PUBLISHING, BRISTOL, Bd. 6, Nr. 9, 1. September 1995 (1995-09-01), Seiten 1236-1241, XP000528779 ISSN: 0957-0233

**Beschreibung**

Die Erfindung betrifft ein Verfahren sowie eine Vorrichtung zum Bestimmen von Konzentrations- und Temperaturverteilungen von beliebigen, vorzugsweise gasförmigen Medien.

Zum Untersuchen eines Mediums auf seine Inhaltsstoffe werden bisher probennehmende Verfahren angewendet, bei welchen an einem definierten Ort im Medium mittels einer Sonde eine Probe des Mediums entnommen und anschließend analysiert wird, oder es wird mit einem Temperaturfühler die Temperatur gemessen. Mit einer möglichst dichten Abtastung des Mediums läßt sich eine hohe Ortsauflösung erreichen.

Eine andere Möglichkeit ist die berührungslose Messung der Strahlung aus dem Medium. Berührungslos messende Sensoren können im wesentlichen in zwei Kategorien eingeteilt werden, nämlich in abbildende Sensoren oder Bildsensoren und in Spektrometer. Bei Einsetzen eines Bildsensors wird die aus definierten Raumwinkeln empfangene elektromagnetische Strahlung auf Detektoren abgebildet, denen Bildpunkte zugeordnet sind. Ein Detektor liefert ein niedrigaufgelöstes Spektrum mit einigen wenigen Spektralkanälen. Die Gesamtheit aller Bildpunkte eines Spektralkanals liefert ein Bild. Es ist somit möglich, mehrere Spektralbereiche gleichzeitig zu beobachten.

Aus den Charakteristika des Spektrums eines Bildpunktes kann beispielsweise auf den Typ des emittierenden oder reflektierenden Materials geschlossen werden. Damit ist eine Klassifikation der beobachteten Szene möglich. Auch eine grobe Differenzierung zwischen Vorder- und Hintergrund ist teilweise möglich. Beispielsweise kann im Infraroten in manchen Spektralbereichen durch Rauchwolken hindurchgesehen und damit identifiziert werden, was sich im Hintergrund der Rauchwolke befindet.

Ferner gibt es breitbandig messende Instrumente (Spektrometer), wie beispielsweise Michelson-Interferometer, die eine schlechte räumliche, dafür aber eine gute spektrale Auflösung haben. Mit solchen Spektrometern werden Informationen über Konzentrationen und Temperaturen entlang der Sichtlinie des Spektrometers aus den hochaufgelösten spektralen Signaturen erhalten. Diese Information ist jedoch über das Gesichtsfeld des Spektrometers gemittelt.

Bei den probennehmenden Verfahren müssen das zu untersuchende Medium und die zu untersuchenden Orte im Medium zugänglich sein, was nicht immer gewährleistet ist. So sind beispielsweise solche Untersuchungen an Festkörpern ohne deren Zerstörung nicht möglich. Außerdem kommt es durch den direkten Kontakt zwischen Meßsonde und Medium zu durch die eingesetzte Sonde hervorgerufenen Rückwirkungen auf die Zusammensetzung des Mediums. Bei Triebwerken kann sich dies sogar bis in die Brennkammer hinein auswirken und die charakteristischen Eigenschaften der Triebwerke verfälschen.

Wird berührungslos mit Bildsensoren gemessen, so wird nur beschränkt Information über die Temperatur- und Konzentrationsverteilung der Inhaltsstoffe entlang der Sichtlinie dieser Sensoren erhalten. Mit Spektrometern läßt sich eine räumliche Auflösung entlang der Sichtlinie zwar erreichen, die Auflösung senkrecht zu dieser Sichtlinie ist jedoch sehr beschränkt.

Sollen sowohl eine hohe raumliche Auflösung als auch eine hohe spektrale Auflösung erreicht werden, so können ortsauflösende Spektrometer eingesetzt werden; hierbei ergeben sich jedoch folgende Nachteile:

Ortsauflösende Spektrometer sind technisch sehr aufwendig. Im Extremfall muß hinter jedem Bildpunkt ein gesondertes Spektrometer vorgesehen werden, um möglichst gleichzeitig messen zu können. Andernfalls müssen bei Einsetzen von wenigen Spektrometern die Bildpunkte nacheinander gemessen werden, was wiederum Probleme durch den zeitlichen Versatz mit sich bringt. Ferner sind ortsauflösende Spektrometer im Vergleich zu rein abbildenden Sensoren oder Spektrometern sehr teuer. Für aktuelle Anwendungen müßten daher neue Geräte entwickelt werden.

Aus dem Dokument Mark L. G. Althouse, Chein-I Chang: "Chemical vapor detection with a multispectral thermal imager" in "OPTI-CAL ENGINEERING", Vol.30, No. 11, November 1991, Seiten 1725 bis 1732, XP000234518 ISSN:0091-3286 ist ein Verfahren zur Detektion von chemischen Dämpfen mit einem multispektralen Wärmebildgerät bekannt.

Hierbei wird mit zwei Detektor-Arrays gearbeitet, von denen das erste Array ein lineares Array für das gesamte zu erfassende IR-Spektrum von 8 bis 12 $\mu$m ist und eine Szene zur Bildung eines Videobildes abtastet und das zweite Array prinzipiell gleich konstruiert ist wie das erste Array, darüber hinaus aber ein darüber angeordnetes Brennebenenfilter aufweist, das aus einem über das ganze zu erfassende Spektralband durchlässigen Fenstermaterial und darüber einer Schmalbandfilterbeschichtung zusammengesetzt ist. Diese Beschichtung besteht aus sich in ihrer Anordnung wiederholenden, nebeneinander liegenden Patches für frequenzmäßig unterschiedliche, schmale Durchlaßbänder, die in ihrer Gesamtheit das zu erfassende Spektralband überdecken.

Es erfolgt mit diesem zweiten Detektorarray die Abtastung der gleichen Szene wie mit dem ersten Array, allerdings ist das mittels des zweiten Detektorarrays erzeugte Videobild im Gegensatz zum ersten Videobild spektrometrisch stark frequenzaufgelöst. Das sich durch die Abtastung ergebende Gesichtsfeld des spektral hoch auflösenden, zweiten Detektorarrays ist hierbei von dem sich durch die Abtastung ergebenden Gesichtsfeld des spektral niedrig auflösenden, ersten Detektorarrays abgedeckt und es besteht im Spektralbereich des ersten Detektorarrays eine Empfindlichkeit gegenüber Parametern, die den zu untersuchenden chemischen Dampf beschreiben und zugleich das Spektrum des mit den Patches belegten und spektral hoch auflösenden, zweiten Detektorarrays beeinflussen.

Die beiden das gleiche Gesichtsfeld abdeckenden Bilder werden mittels Videoelektronik und eines einen Detektionsalgorithmus ausführenden, digitalen Bildprozessors zusammengeführt, analysiert und schließlich mit einem geeigneten Anzeigemode auf einem Bildschirm übereinander dargestellt, so daß sich Merkmale einer chemischen Dampfwolke erkennen lassen. Dieses bekannte Verfahren arbeitet nur dann, wenn bei der spektral hoch auflösenden Einrichtung zugleich eine hohe räumliche Auflösung besteht, es sich also auch hierbei um einen echten Bildsensor handelt, da nur dann die beiden Bilder sinnvoll zur Überdeckung gebracht werden können. Ortsauflösende und zugleich breitbandig messende Spektrometer sind aber technisch sehr aufwendig und deswegen teuer.

Technisch weniger aufwendige, breitbandig messende Spektrometer, wie beispielsweise Michelson-Interferometer, die eine schlechte räumliche Auflösung, dafür aber eine hervorragende spektrale Auflösung haben, und die Informationen über Konzentrationen und Temperaturen im wesentlichen nur entlang der Sichtlinie aus den hoch aufgelösten spektralen Signaturen gemittelt über das Gesichtsfeld zulassen, sind bei diesem bekannten Verfahren nicht einsetzbar.

Aufgabe der Erfindung ist es, berührungslos Konzentrations- und Temperaturverteilungen von beliebigen, vorzugsweise gasförmigen Medien unter Verwendung eines spektral niedrig auflösenden Bildsensors und eines breitbandig messenden Spektrometers, das eine schlechte räumliche Auflösung, dafür aber eine hohe spektrale Auflösung hat, zu bestimmen, wobei die mit diesen beiden kombinierten Einrichtungen gemessenen bildhaften und spektralen Daten mit Hilfe eines geeigneten Auswerteverfahrens analysiert werden können. Es soll darüber hinaus eine Vorrichtung zur Durchführung eines solchen Bestimmungsverfahrens geschaffen werden.

Gemäß der Erfindung wird diese Aufgabe durch ein Verfahren mit den Merkmalen des Anspruchs 1 sowie mit einer Vorrichtung zur Durchführung des Verfahrens mit den Merkmalen des Anspruchs 9 oder alternativ des Anspruchs 10 gelöst.

Hierbei sind gemäß der Erfindung das Verfahren und die Vorrichtung entsprechend ausgelegt, um mittels Bildsensoren spektral niedrig aufgelöste Bilder und spektral hoch aufgelöste Spektren eines Spektrometers zu messen und aus einer Verknüpfung dieser Daten, bezogen auf die jeweilige Anwendung, eine optimale Information über einen Satz von Parametern zu bestimmen, die die Eigenschaften eines Mediums und des Hintergrunds der Meßanordnung beschreiben.

Solche Parameter können beispielsweise die Zusammensetzung des Mediums, d.h. Konzentrationsprofile der Inhaltsstoffe des Mediums in Abhängigkeit von den Raumkoordinaten oder Temperaturverteilungen sein. Die Hintergrundstrahlung kann beispielsweise durch die Hintergrundtemperaturverteilung parametrisiert sein. Der Begriff "auf eine Anwendung bezogene, optimale Information" bezieht sich auf die Tatsache, daß in der Regel bei der Bestimmung der Parameter schlecht konditionierte Gleichungssysteme auftreten, die durch anwendungsbezogene Nebenbedingungen ergänzt werden, um eine eindeutige Lösung zu erzielen.

Um die Zusammenführung der bildhaften und spektralen Daten zu ermöglichen, muß das Gesichtsfeld, welches der Bildsensor "sieht", das Gesichtsfeld beinhalten, welches das hoch auflösende Spektrometer "sieht". Damit ist das Gesichtsfeld des Spektrometers vollständig mit Bildpunkten abgedeckt.

Die Spektralbereiche von Bildsensor und Spektrometer sollen sich überlappen und der Satz Parameter, der aus dem hoch aufgelösten Spektrum bestimmbar ist, beeinflußt teilweise die Spektralbereiche des Bildsensors. Damit ist gewährleistet, daß Informationen über die Flächenverteilung der gesuchten Parameter in den Spektren der Bildpunkte des Bildsensors vorhanden sind.

Das erfindungsgemäße Verfahren ist auf Emissions- und Absorptionsmessungen wie auch auf Kombinationen aus diesen anwendbar. Im allgemeinen spielt bei der Messung sowohl Emission als auch Absorption eine Rolle, da in der Regel eine Mischung beobachtet wird.

Hauptanwendungsgebiet der Erfindung ist die Untersuchung von heißen Gasvolumina hinsichtlich Zusammensetzung und Temperaturverteilung, wie beispielsweise die flugzeug- oder satellitengestützte Beobachtung von Hochtemperaturereignissen auf der Erdoberfläche. Es besteht nämlich einerseits großer wissenschaftlicher Bedarf an der Untersuchung von Vegetationsbränden, Vulkanausbrüchen und deren Auswirkungen auf die Umwelt; andererseits haben sie große Bedeutung für Frühwarnsysteme mit zusätzlicher quantitativer Information über die Art eines Brandes und dessen toxische Emissionen.

Eine andere Anwendung des erfindungsgemäßen Verfahrens und der Vorrichtung zu dessen Durchführung ist die Untersuchung der Zusammensetzung und Temperaturverteilung von Triebwerksabgasen. Der besondere Vorteil gegenüber probennehmenden Verfahren ist das berührungslose Messen, da dadurch keine Rückwirkungen auf die Brennkammer des Triebwerks entstehen, was vor allem wichtig bei der Entwicklung und Wartung von Triebwerken im Prüfstand und deren Untersuchung im Flug ist. Auch bei Untersuchungen und Überprüfungen von Industrieanlagen sowie von Mülldeponien ist das erfindungsgemäße Verfahren einsetzbar.

Das erfindungsgemäße Verfahren kann generell auf jede Art von Medium angewendet werden und ist von den Spektralbereichen unabhängig, das heißt, es kann bei geeigneter Anpassung der Geräte auch auf andere Spektralbereiche angewendet werden.

Nachfolgend wird die Erfindung anhand der anliegenden Zeichnungen im einzelnen erläutert. Es zeigen:

Fig.1    eine schematische Darstellung einer Vorrichtung zur Durchführung des Verfahrens;

Fig.2    ein Numerierungsschema im Bereich eines Sichtstrahls;

Fig.3    schematisch eine Diskretisierung in Richtung der z-Achse, und

Fig.4    ein Ablaufdiagramm eines Auswerteverfahrens.

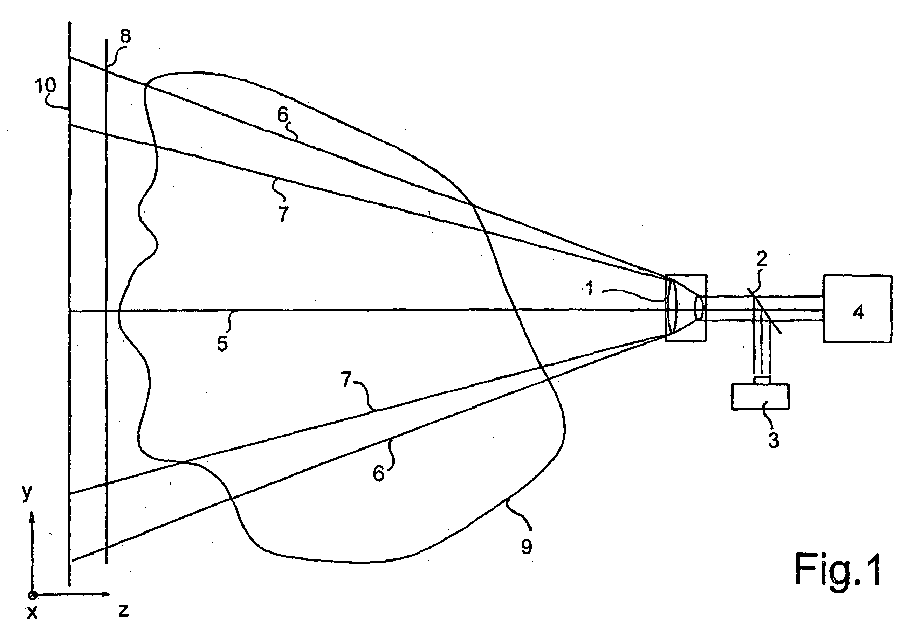

In Fig.1 ist schematisch eine bevorzugte Ausführungsform einer Vorrichtung zum Durchführen des Verfahrens dargestellt, die einen Bildsensor 3 und ein Spektrometer 4 aufweist. Als Spektrometer wird vorzugsweise ein Michelson-Interferometer verwendet. Es sind jedoch auch andere Spektrometer, wie Gitterspektrometer oder Prismenspektrometer usw., verwendbar. Der verwendete Spektrometertyp ist nach dem zu beobachtenden Spektralbereich, der erforderlichen spektralen Auflösung und dem Signal/Rauschverhältnis auszuwählen.

Die Darstellung in Fig.1 liegt beispielsweise in der *yz*-Ebene. Emittierte Strahlung eines zu untersuchenden Mediums 9 und die transmittierte Strahlung des Hintergrundes 10 wird von einer gemeinsamen Eintrittsoptik 1 über einem Strahlteiler 2 auf das Spektrometer 4 und den Bildsensor 3 verteilt. Daher "sehen" Bildsensor 3 und Spektrometer 4 bei dieser Anordnung durch die gleiche Eintrittsoptik 1, deren optische Achse 5 in Richtung der z-Achse gewählt ist.

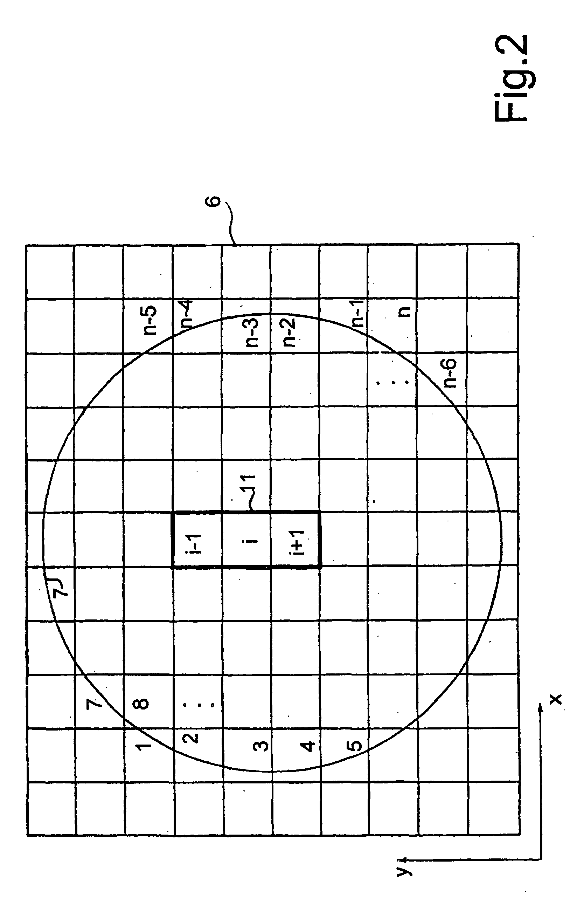

Es sind jedoch auch andere Anordnungen möglich, in denen das Spektrometer 4 und der Bildsensor 3 eigene Eintrittsoptiken haben. Es muß lediglich gewährleistet sein, daß das Gesichtsfeld 7 des Spektrometers 4 im zu untersuchenden Raumbereich innerhalb des Gesichtsfeldes 6 des Bildsensors 3 liegt. Ein senkrecht zur optischen Achse 5 durchgeführter Schnitt 8 wird nachstehend anhand von Fig.2 erläutert.

Bevorzugter Einsatzbereich der vorstehend beschriebenen Anordnung ist die Beobachtung von Hochtemperaturereignissen, wie Bränden oder Vulkanausbrüchen auf der Erdoberfläche, die von Satelliten oder Flugzeugen aus beobachtet werden. Eine andere Anwendung ist die Beobachtung von heißen Triebwerksabgasen, die im Prüfstand oder im Flug gemessen werden. Das erfindungsgemäße Verfahren ist generell bei beliebigen Medien anwendbar.

Für die Größe der Gesichtsfelder können typische Werte angegeben werden. Beispielsweise hat ein satellitengestütztes, nadir-blickendes Spektrometer bei der Beobachtung aus einer Höhe von etwa 700km ein Gesichtsfeld am Boden von etwa $100km^2$ (Abmessung ca. 10km x 10km) und das Gesichtsfeld eines Bildpunktes des abbildenden Sensors entspricht in etwa $0,1km^2$ (Abmessung ca. 0,3km x 0,3km). Damit ergeben sich ca. 1000 Bildpunkte, die mit dem Spektrometergesichtsfeld überlappen. Hat der Bildsensor 1024 Detektorelemente pro Zeile, so beträgt die Abmessung des Gesichtsfeldes am Boden quer zur Flugrichtung des Satelliten etwa 300km.

Bei Hochtemperaturereignissen wird die thermische Emission von Gasen und die Absorption der heißen Hintergrundstrahlung beobachtet. Der geeignete Spektralbereich des Spektrometers muß im Infraroten liegen, da in diesem Bereich die relevanten Gase starke thermische Emission und Absorption zeigen. Interessante Gasparameter sind vor allem die Temperaturverteilung, der Kohlenmonoxid-, Kohlendioxid- und Wasserdampfgehalt sowie die Rauchverteilung, da diese Parameter die wesentlichen Charakteristika der Spektren in diesem Spektralbereich bestimmen. Aber auch andere Spezies, die für verschiedene Arten von Hochtemperaturereignissen relevant sind, wie Stickstoffoxide und Methan bei Vegetationsfeuern oder Schwefeldioxid bei Vulkanausbrüchen, lassen sich in diesem Spektralbereich bestimmen.

Kohlenmonoxid läßt sich im Bereich von 4,55 bis 4,88μm, Kohlendioxid und die Gastemperatur lassen sich in den Bereichen der Absorptionsbandenkanten bei 13,0 bis 15,4μm und 4,13 bis 4,26μm und Wasserdampf läßt sich im Bereich 4,88 bis 5,13μm beobachten; Rauchpartikel emittieren schwach wellenlängenabhängig über den gesamten Spektralbereich zwischen 15μm und 0,6μm. Schwefeldioxid emittiert bei 8,55μm bis 8,70μm, 7,30μm bis 7,41μm und 3,97μm bis 4,00μm, Methan bei 7,41μm bis 8,33μm und 3,44μm bis 3,70μm und Stickoxide ($NO$, $NO_2$) bei 6,10 bis 6,29μm, 5,34 bis 5,29μm und 3,41 bis 3,44μm. Die Eigenschaften der Hintergrundstrahlung vom Boden läßt sich in den atmosphärischen Fensterbereichen bestimmen.

Der Bildsensor 3 arbeitet ungefähr in den bekannten atmosphärischen Fensterbereichen im thermischen Infrarot (TIR) von 8 bis 12μm, im mittleren Infrarot (MIR) von 3 bis 5μm und im nahen Infrarot (NIR) von 0.8 bis 0.9μm.

Wichtig ist, daß diese Bereiche erfindungsgemäß so erweitert und ergänzt werden, daß sie teilweise von den oben aufgezählten Spezies beeinflußt werden. So kann beispielsweise durch Erweiterung des TIR- und MIR-Bereichs auf die Kohlendioxid-Absorptionsbandenkanten eine Empfindlichkeit auf Kohlendioxid und die Gastemperatur erreicht werden. Eine Empfindlichkeit auf Kohlenmonoxid läßt sich durch einen Kanal im Bereich der Kohlenmonoxid-Absorptionsbande im mittleren Infrarot im Bildsensor 3 herbeiführen. Die MIR- und NIR-Bereiche sind von der Streuung und Absorption der Rauchpartikel beeinflußt.

Mit dem erfindungsgemäßen Auswerteverfahren wird eine Vorschrift zur Auswertung der Kombination aus Bild- und Spektraldaten angegeben. In Fig.2 ist ein senkrecht zur z-Achse verlaufender Schnitt 8 aus Fig.1 in der xy-Ebene dargestellt. Das Gesichtsfeld 6 des Bildsensors 3 ist hier als rechteckig und das Gesichtsfeld 7 des Spektrometers 4 als kreisförmig angenommen. Die Gesichtsfelder können jedoch auch beliebige andere Formen haben.

Das Gesichtsfeld des Bildsensors 3 ist in rechteckige Bereiche unterteilt, die auf die Bildpunkte des Sensors abgebildet werden. Bei realen Bildsensoren 3 ist zu berücksichtigen, daß sich die Bildpunkte durch Beugungseffekte und Übersprechen von Detektorelementen gegenseitig beeinflussen.

Alle Bereiche, in denen sich das Gesichtsfeld des Spektrometers 4 und des Bildsensors 3 überlappen, sind durchnumeriert. Es gibt n solcher Bereiche. Zu jedem Bereich $i$ gehört ein Wert $0 < \alpha_i \leq 1$ mit $i = 1,...,n$, der das Verhältnis der vom Spektrometer 4 zu der vom Bildsensor 3 gesehenen Fläche angibt. Die Größen $\alpha_i$ sind aus der Geometrie der Meßanordnung bekannt.

Vom Bereich $i$ findet entlang der Sichtlinie zur Eintrittsoptik 1 der Strahlungstransport durch das zu untersuchende Medium zum Bildsensor 3 und zum Spektrometer 4 statt. Dieser Strahlungstransport hängt von einem Satz von Parametern $\vec{f}_i$, die die Eigenschaften des Mediums beschreiben, und einem Satz von Parametern $\vec{b}_i$ ab, die die Eigenschaften der Hintergrundstrahlung beschreiben, ab. Die Parameter $\vec{f}_i$ und $\vec{b}_i$ stellen die gesuchten Größen dar.

Im allgemeinen entsprechen die Parametervektoren $\vec{f}_i$ und $\vec{b}_i$ einer diskretisierten Näherung von Funktionen $f(x,y,z)$ und $b(x,y)$, die kontinuierlich von den Raumkoordinaten abhängen. Eine konkrete Diskretisierungsvorschrift für $f(x,y,z)$ entlang der z-Achse wird später angegeben.

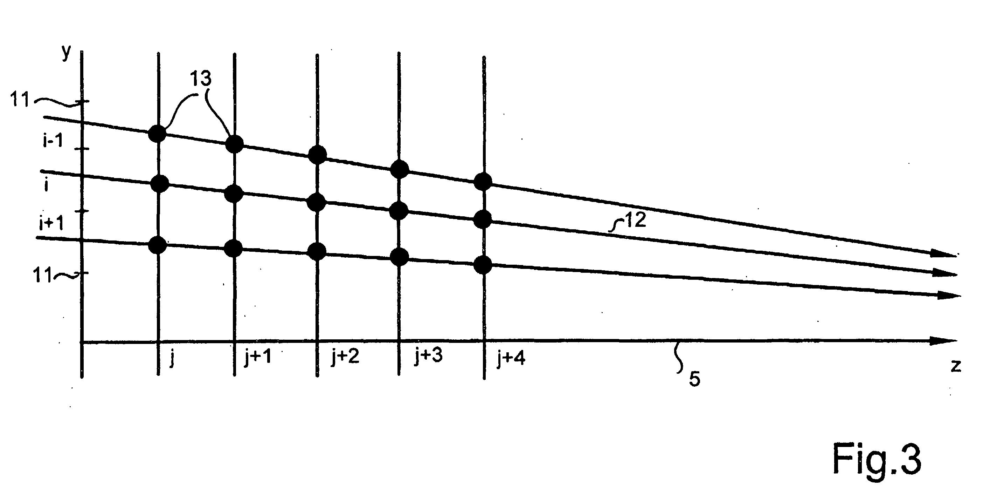

Der Strahlungstransport kann in bekannter Weise modelliert werden. Mit dem Bezugszeichen 11 ist der Gesamtbereich mit den Elementen $i$-1, $i$, $i + 1$ bezeichnet, der anhand von Fig.3 näher beschrieben wird.

In Fig.2 hat das Spektrometer 4 nur ein Gesichtsfeld; im allgemeinen jedoch können alle folgenden Betrachtungen einfach auf mehrere Gesichtsfelder des Spektrometers 4 erweitert werden, indem der Formalismus auf jedes Gesichtsfeld des Spektrometers einzeln angewendet wird.

Zu jedem Bereich $i$ in Fig.2 gehört ein niedrigaufgelöstes Spektrum $I_i^l(v,\vec{b}_i,\vec{f}_i)$ des Bildsensors 3. Hierbei ist mit $v$ die Wellenzahl in cm$^{-1}$ bezeichnet. Alle Bereiche $j_i$ für $i = 1, ..., n_k$, mit der gleichen spektralen Charakteristika und der gleichen Intensität $I_k^l(v,\vec{b}_k,\vec{f}_k)$ können zu einem Gesamtbereich $k$ zusammengefaßt werden, wenn die Wege durch das Medium ähnlich sind. Derartige Klassifizierungen sind in bekannter Weise durchführbar. Die Zusammenfassung wird durch Aufsummation der Spektren erreicht. Dadurch wird bei der Auswertung später die Rechenzeit erheblich reduziert, da nicht jeder Strahlungstransport entlang jeder einzelnen Sichtlinie gerechnet werden muß.

Maximal enthält der Bereich $k$ mit dem Spektrum $I_k^l(v,\vec{b}_k,\vec{f}_k)$ die Information über gemeinsame Parametervektoren $\vec{b}_k$ und $\vec{f}_k$. Verschiedene Parametervektoren, die zu demselben Spektrum führen, können nicht getrennt werden.

Der Beitrag des Bereiches $k$ zum spektral hochaufgelösten Gesamtspektrum des Spektrometers ist durch

$$\beta_k = \sum_{j=1}^{n_k} \alpha_{i_j},$$

$$(1)$$

gegeben. Liegen im Sichtfeld des Spektrometers K Bereiche mit typischen Charakteristika für die spektral niedrigaufgelösten Spektren der Bildpunkte, dann ist das hochaufgelöste Gesamtspektrum des Spektrometers eine Überlagerung der Einzelbeiträge $I_k^h(v,\vec{b}_k,\vec{f}_k)$

$$I^h(\nu,\vec{b}_1,\dots,\vec{b}_K,\vec{f}_1,\dots,\vec{f}_K) = \sum_{k=1}^{K} \beta_k \, I_k^h(\nu,\vec{b}_k,\vec{f}_k).$$

$$(2)$$

Hierbei hängen die niedrigaufgelösten Spektren $I_k^l(v,\vec{b}_k,\vec{f}_k)$ der Bildpunkte des Bildsensors und das hochaufgelöste Spektrum $I^h(v,\vec{b}_1,...,\vec{b}_K,\vec{f}_1,...,\vec{f}_K)$ des Spektrometers im allgemeinen neben den gemeinsamen Parametern $\vec{f}_k$ auch noch von anderen Parametern ab. Diese sind entweder als bekannt vorausgesetzt oder sie können simultan mit den gemeinsamen Parametern bestimmt werden. Da bei diesen Parametern aber die Verbindung zwischen den Bilddaten und dem Spektrum des Spektrometers fehlt, unterliegen sie den eingangs angeführten Einschränkungen.

Liegt beispielsweise bei der satellitengestützten Untersuchung von Hochtemperaturereignissen auf der Erdoberfläche die thermische Emission von $CH_4$ nicht im Spektralbereich des Bildsensors, so läßt sich nur die über das Gesichtsfeld des Spektrometers gemittelte Höhenverteilung von $CH_4$ bestimmen. Der Einfachheit der Notation wegen werden im folgenden nur gemeinsame Parameter $\vec{f}_k$ betrachtet.

Vor der Formulierung des Auswertealgorithmus wird noch eine Diskretisierungsvorschrift für die gesuchten Parametervektoren $\vec{f}_k$ angegeben. Zur Vereinfachung der Darstellung beschreibe ein Vektor $\vec{f}_k$ eine Eigenschaft des Mediums in Abhängigkeit von den Raumkoordinaten, beispielsweise ein Konzentrationsprofil.

Fig.3 zeigt den Ausschnitt 11 der Fig.2 in der *yz*-Ebene, wobei dieser Bereich mit der Sichtlinie 12 vergrößert dargestellt ist. Punkte 13 sind die Diskretisierungspunkte von Vektoren $\vec{f}_{i-1}, \vec{f}_i$ und $\vec{f}_{i+1}$ entlang der jeweiligen Sichtlinie. Damit sind die Komponenten eines Vektors $\vec{f}_i$ Werte des Profils entlang der *z*-Achse des Koordinatensystems. Alle Komponenten der Vektoren mit der Nummer *j* gehören zu derselben *z*-Koordinate. Die Werte zwischen benachbarten Diskretisierungspunkten können beispielsweise durch lineare Interpolation bestimmt werden.

In den folgenden Betrachtungen ist davon ausgegangen, daß nur eine Eigenschaft des Mediums gesucht ist. Sie können in einfacher Weise verallgemeinert werden, indem für jede weitere gesuchte Eigenschaft ein weiterer Satz von Vektoren nach dieser Diskretisierungvorschrift einführt und das Lösungsschema auf alle diese Vektoren gleichzeitig angewendet wird.

Ausgangspunkt für die Suche nach dem unbekannten Satz von Parametern ist, daß die gemessenen Spektren des Bildsensors 3 und das Spektrum des Spektrometers 4 an diskreten spektralen Stützstellen gegeben sind. Daher wird die Vektorschreibweise für die gemessenen Spektren eingeführt, wobei die Komponente eines Vektors dem Wert des Spektrums zu einer bestimmten Frequenz entspricht. $\vec{l}_k^l$ für *k* = 1, ..., *K* sind die gemessenen Spektren des Bildsensors 3, und $\vec{l}^h$ ist das gemessene Spektrum des Spektrometers 4. Analog bezeichnet $\vec{l}_k^l(\vec{b}_k, \vec{f}_k)$ das theoretische Fit-Modell für die Spektren des Bildsensors 3 und $\vec{l}^h(\vec{b}_1, ..., \vec{b}_K, \vec{f}_1, ..., \vec{f}_K)$ das entsprechende Fit-Model für das Spektrum des Spektrometers 4. Beide Modelle sind im allgemeinen nichtlineare Funktionen bezüglich der Parametervektoren.

Um den Satz von unbekannten Parametern $\vec{b}_1, ..., \vec{b}_K, \vec{f}_1, ..., \vec{f}_K$ gleichzeitig aus den Bilddaten und den Spektraldaten zu bestimmen, wird eine nichtlineare Minimierung der Abstandsquadrate

$$\min_{\vec{b}_1, ..., \vec{b}_K, \vec{f}_1, ..., \vec{f}_K} \|\vec{l}^h - \vec{l}^h(\vec{b}_1, ..., \vec{b}_K, \vec{f}_1, ..., \vec{f}_K)\|^2 \text{ und}$$

$$\min_{\vec{b}_i, \vec{f}_i} \|\vec{l}_i^l - \vec{l}_i(\vec{b}_i, \vec{f}_i)\|^2, \text{ für } i = 1, ..., K, \qquad (3)$$

gefordert, um die optimale Information aus den Bild- und Spektraldaten zu erhalten. Die Meßvektoren $\vec{l}^h$ und $\vec{l}_i^l$, *i* = 1, ..., *K* können zu einem Gesamtmeßvektor

$$\vec{l} = \begin{pmatrix} \vec{l}^h \\ \vec{l}_1^l \\ \cdot \\ \cdot \\ \cdot \\ \vec{l}_K^l \end{pmatrix},$$

$$(4)$$

und analog können die gesuchten Parametervektoren $\vec{b}_1, ..., \vec{b}_K, \vec{f}_1, ..., \vec{f}_K$ zu einem Gesamtparametervektor

$$\vec{x} = \begin{pmatrix} \vec{b}_1 \\ \vec{b}_2 \\ \cdots \\ \vec{b}_K \\ \vec{f}_1 \\ \vec{f}_2 \\ \cdots \\ \vec{f}_K \end{pmatrix}, \tag{5}$$

konkateniert werden.

Ebenso können die Fit-Modelle

$$\vec{I}(\vec{x}) = \begin{pmatrix} \vec{I}^h(\vec{b}_1, \ldots, \vec{b}_K, \vec{f}_1, \ldots, \vec{f}_K) \\ \vec{I}_1^l(\vec{b}_1, \vec{f}_1) \\ \cdots \\ \vec{I}_K^l(\vec{b}_K, \vec{f}_K) \end{pmatrix}, \tag{6}$$

zusammengesetzt werden. Wird nunmehr berücksichtigt, daß sich - wie schon erwähnt - Spektralkanäle des Bildsensors gegenseitig beeinflussen, so gilt ganz allgemein

$$\vec{I}(\vec{x}) = \begin{pmatrix} \vec{I}^h(\vec{b}_1, \ldots, \vec{b}_K, \vec{f}_1, \ldots, \vec{f}_K) \\ \vec{I}_1^l(\vec{b}_1, \ldots, \vec{b}_K, \vec{f}_1 \ldots, \vec{f}_K) \\ \cdots \\ \vec{I}_K^l(\vec{b}_1, \ldots, \vec{b}_K, \vec{f}_1, \ldots, \vec{f}_K) \end{pmatrix} \tag{7}$$

So kann das Minimierungsproblem (3) auch als

$$\min_{\vec{x}} (\vec{I} - \vec{I}(\vec{x}))^T W^{-1} (\vec{I} - \vec{I}(\vec{x})) \tag{8}$$

geschrieben werden, wobei $W^{-1}$ eine Matrix ist, die die Gewichtung zwischen den Messungen angibt. Die Matrix $W^{-1}$ ist im allgemeinen proportional zur Inversen der Varianz-Kovarianzmatrix der Meßvektoren, und hat Blockdiagonalgestalt.

Das Minimierungsproblem (8) läßt sich in bekannter Weise durch ein nichtlineares Minimierungsverfahren lösen, wenn das Problem gut gestellt ist. In der Regel jedoch wird das Minimierungsproblem (8) nicht eindeutig lösbar, oder schlecht gestellt sein. Die Lösbarkeit kann durch Einführung zusätzlicher, physikalisch sinnvoller, anwendungsbezogener Nebenbedingungen, wie zum Beispiel Positivität, Glätte oder Monotonie der Lösung, herbeigeführt werden. Monotonie und Positivität sind in bekannter Weise durch lineare Nebenbedingungen einzuführen. Die Glättung ist in bekannter Weise durch Einführung quadratischer Nebenbedingungen erreichbar.

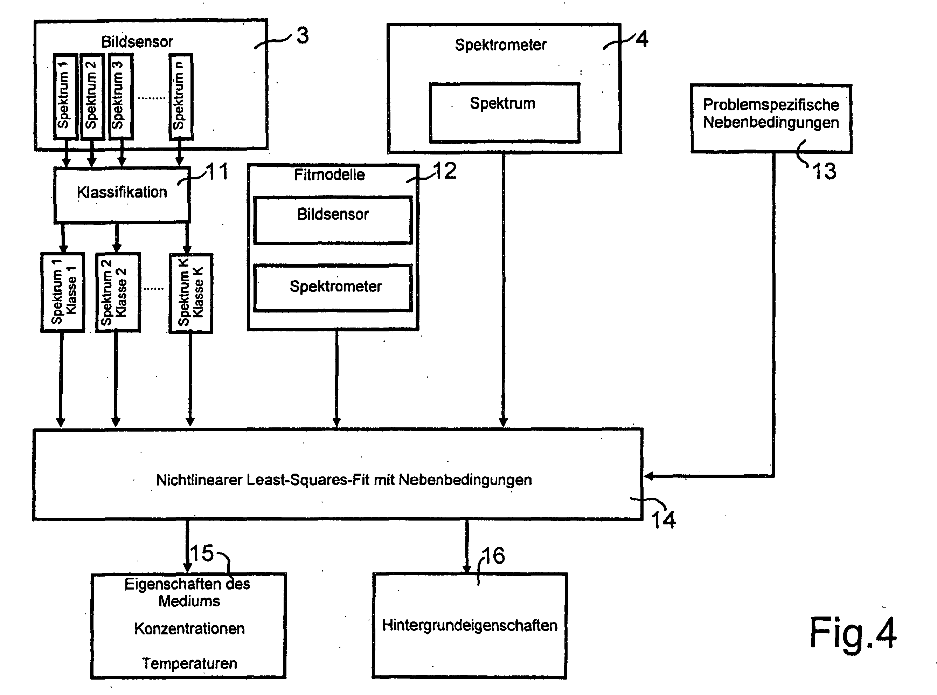

In Fig.4 ist schematisch der Ablauf einer Auswertung wiedergegeben. Zunächst wird der überlappende Bereich von Bildsensor 3 und Spektrometer 4, wie in Fig. 2 beschrieben, durchnumeriert. Anschließend werden die n gemessenen Spektren der Bildpunkte des Bildsensors 3 zunächst nach ihrer spektralen Charakteristik in bekannter Weise in einer Klassifikationseinrichtung 11 klassifiziert und es werden die Gewichte $\beta_k$ über die Flächenanteile der Bildpunkte einer Klasse nach Gl.(1) gebildet. Die Klassifizierung liefert damit durch die Aufsummation der niedrigaufgelösten Spektren der Bildpunkte einer Klasse einen Satz von k niedrigauf-gelösten Spektren der zusammengefaßten Bildbereiche. Dies ermöglicht bei der Auswertung eine erhebliche Reduzierung der Rechenzeiten, da der Strahlungstransport nicht für jeden Bildpunkt, sondern nur für jede Klasse durchgeführt werden muß.

Jede Klasse wird durch ihre Hintergrundtemperatur, Gaskonzentrations- und Temperaturprofile beschrieben; unter Annahme dieses Parametersatzes wird für jede Klasse in einer Fit-Modellierungseinrichtung 12 einerseits ein niedrigaufgelöstes Bildspektrum und andererseits ein hochaufgelöstes Spektrum modelliert, wobei die Linearkombination dieser hochaufgelösten Spektren nach Gl.(2) das modellierte hochaufgelöste Spektrum des Spektrometers 4 liefert.

Durch Konkatenierung der Spektren der zusammengefaßten Bildbereiche und des Spektrums des Spektrometers 4 zu einem Gesamtmeßvektor und durch analoge Konkatenierung der modellierten Spektren zu einem Gesamt-Modellvektor unter Berücksichtigung der Gewichtung durch die blockdiagonale, inverse Varianz-Kovarianzmatrix der Messungen wird das Least-Squares-Problem aus Gl.(8) erhalten. Durch Erweiterung des Least-Squares-Problems durch problemspezifische Nebenbedingungen 13 (z.B. Glättebedingungen an die Lösung durch quadratische Nebenbedingungen) wird die Eindeutigkeit der Lösung der Optimierungsaufgabe erreicht.

Das nichtlineare Optimierungsproblem wird in bekannter Weise in einer Einrichtung 14 zur Prozessierung des nichtlinearen Least-Square-Fits mit Nebenbedingungen iterativ durch Variation der Klassenparameter gelöst, bis die modellierten und beobachteten Spektren (unter Berücksichtigung des Rauschens) übereinstimmen. Das Ergebnis sind am Ausgang 15 die Verteilung der Konzentrationen und Temperaturen im untersuchten Medium und am Ausgang 16 die Eigenschaften des Hintergrunds.

## Patentansprüche

1. Verfahren zum Bestimmen von Konzentrations- und Temperaturverteilungen von beliebigen, vorzugsweise gasförmigen Medien, bei dem spektral niedrig aufgelöste Bilder mittels eines Bildsensors (3) und spektral hochaufgelöste Spektren mittels eines Spektrometers (4) erfaßt werden, dessen Gesichtsfeld (7) vom Gesichtsfeld (6) des Bildsensors eingeschlossen und vollständig von mittels des Bildsensors erfaßten Bildpunkten abgedeckt ist, und bei dem bei sich überlappenden Spektralbereichen des Bildsensors und des Spektrometers der/die Spektralbereich/e des Bildsensors dahingehend ausgedehnt wird/werden, dass darin eine Empfindlichkeit gegenüber Parametern besteht, die das zu untersuchende Medium beschreiben und die zugleich das Spektrum des Spektrometers beeinflussen, wobei gemessene Daten des Bildsensors und des Spektrometers mittels eines Auswerteverfahrens zusammengeführt und analysiert werden, **dadurch gekennzeichnet, dass** das Auswerteverfahren, mit dem die gemessenen Bilddaten des Bildsensors (3) und die spektralen Daten des Spektrometers (4) zusammengeführt und analysiert werden, darin besteht, dass eine Vorschrift für die Bildpunkt-Einteilung und Bildpunkt-Durchnumerierung des überlappenden Bereiches von Spektrometer- und Bildsensorgesichtsfeld (6, 7) zusammen mit einer Diskretisierungsvorschrift für das gesuchte Parameterprofil vorgenommen wird, dass anschließend die gemessenen Spektren der Bildpunkte des Bildsensors (3) nach ihrer spektralen Charakteristik klassifiziert und Bildpunkte einer gleichen Klasse jeweils zu Bildbereichen zusammengefaßt werden, dass für jede Klasse unter Annahme eines für die jeweilige Klasse angenommenen Parametersatzes zum einen ein niedrigaufgelöstes Bildspektrum und zum anderen ein hochaufgelöstes Spektrum modelliert wird, und dass die Modelle der Spektren der zusammengefaßten Bildbereiche und des Spektrums des Spektrometers im Sinne eines nichtlinearen Least-Squares-Fit-Verfahrens an die entsprechenden gemessenen Spektren unter Berücksichtigung einer Gewichtungsmatrix simultan bis zur Übereinstimmung angepaßt werden, wobei dann das Ergebnis die Verteilung der Konzentrationen und Temperaturen im untersuchten Medium (9) und die Eigenschaften des Hintergrunds (10) sind.

2. Verfahren nach Anspruch 1, **dadurch gekennzeichnet, dass** anwendungsbezogene Nebenbedingungen in das Least-Squares-Fit-Verfahren zur Herbeiführung der Eindeutigkeit der Lösung bei schlechtgestellten und unterbestimmten Least-Squares-Problemen eingeführt werden.

3. Verfahren nach Anspruch 1 oder 2, **dadurch gekennzeichnet, dass** das nichtlineare Least-Squares-Fit-Verfahren iterativ durch Variation der Klassenparameter ausgeführt wird, bis die modellierten und gemessenen Spektren unter Berücksichtigung des Rauschens übereinstimmen.

4. Verfahren nach einem der vorhergehenden Ansprüche, **gekennzeichnet durch** eine Erweiterung auf mehrere Spektrometergesichtsfelder **durch** Nacheinanderausführung des Auswerteverfahrens auf jedes einzelne Gesichtsfeld (7) des Spektrometers (4).

5. Verfahren nach einem der vorhergehenden Ansprüche, **gekennzeichnet durch** eine Erweiterung auf die simultane Behandlung mehrerer zu bestimmender Eigenschaften des zu untersuchenden Mediums (9).

6. Verfahren nach einem der vorhergehenden Ansprüche, **gekennzeichnet durch** die Anwendung auf Emissionsmessungen, Absorptionsmessungen oder auf eine Kombination der beiden vorgenannten Messungen bei einem zu untersuchenden Medium (9).

7. Verfahren nach einem der vorhergehenden Ansprüche, **gekennzeichnet** zur Verwendung für die Untersuchung von Hochtemperaturereignissen.

8. Verfahren nach Anspruch 7, **gekennzeichnet durch** eine Messung im infraroten Spektralbereich für die Untersuchung von Hochtemperaturereignissen, wobei der Bildsensor (3) in etwa in den atmosphärischen Fensterbereichen arbeitet und der/die Spektralbereich/e des Bildsensors (3) dahingehend ausgedehnt ist/sind, dass darin eine Empfindlichkeit gegenüber Temperatur, Kohlenmonoxid, Kohlendioxid und Rauchpartikeln besteht.

9. Vorrichtung zur Durchführung des Verfahrens nach Anspruch 1, **dadurch gekennzeichnet, dass** eine Strahlerfassungseinrichtung mit einer gemeinsamen Eintrittsoptik (1) und einem Strahlteiler (2) vorgesehen ist, über welchen emittierte Strahlung eines zu untersuchenden Mediums (9) und transmittierte Strahlung vom Hintergrund (10) des Mediums auf einen Bildsensor (3) und ein Spektrometer (4) aufgeteilt sind, dass der Bildsensor und das Spektrometer so aufeinander abgestimmt sind, dass das Gesichtsfeld (7) des Spektrometers im zu untersuchenden Raumbereich innerhalb des Gesichtsfeldes (6) des Bildsensors liegt, dass das Gesichtsfeld (6) des Bildsensors in rechteckige Bereiche unterteilt ist, die auf das Gesichtsfeld (7) des Spektrometers abgebildet werden und im überlappenden Bereich von Bildsensor und Spektrometer von 1 bis n durchnummeriert sind, dass im Anschluß an den Bildsensor eine Klassifizierungseinrichtung (11) vorgesehen ist, in der die gemessenen Spektren der n Bereiche nach ihrer spektralen Charakteristik klassifiziert und die Bildpunkte einer gleichen Klasse zu Bildbereichen zusammengefaßt werden, dass eine Fit-Modellierungseinrichtung (12) vorgesehen ist, in der unter Annahme eines für die jeweilige Klasse angenommenen Parametersatzes für jede Klasse einerseits ein niedrig aufgelöstes Bildspektrum und andererseits ein hochaufgelöstes Spektrum modelliert wird, dass eine Einrichtung (14) zur Prozessierung des nichtlinearen Least-Square-Fits vorgesehen ist, welche die in der Fit-Modellierungseinrichtung (12) gebildeten Modelle der Spektren der zusammengefaßten Bildbereiche und des Spektrums des Spektrometers an die entsprechenden gemessenen Spektren des Bildsensors bzw. des Spektrometers unter Berücksichtigung einer Gewichtungsmatrix iterativ durch Variation der Klassenparameter simultan bis zur Übereinstimmung anpaßt, und dass an einem ersten Ausgang (15) der Einrichtung (14) zur Prozessierung des nichtlinearen Least-Square-Fits als Ausgangssignal die Verteilung der Konzentrationen und Temperaturen im untersuchten Medium und an einem zweiten Ausgang (16) dieser Einrichtung als Ausgangssignal die Eigenschaften des Hintergrundes anstehen.

10. Vorrichtung zur Durchführung des Verfahrens nach Anspruch 1, **dadurch gekennzeichnet, dass** eine Strahlerfassungseinrichtung mit jeweils einer eigenen Eintrittsoptik für einen Bildsensor (3) und für ein Spektrometer (4) zur Erfassung der emittierten Strahlung eines zu untersuchenden Mediums (9) und der transmittierten Strahlung vom Hintergrund (10) des Mediums für den Bildsensor (3) bzw. das Spektrometer (4) vorgesehen ist, dass der Bildsensor und das Spektrometer so aufeinander abgestimmt sind, dass das Gesichtsfeld (7) des Spektrometers im zu untersuchenden Raumbereich innerhalb des Gesichtsfeldes (6) des Bildsensors liegt, dass das Gesichtsfeld (6) des Bildsensors in rechteckige Bereiche unterteilt ist, die auf das Gesichtsfeld (7) des Spektrometers abgebildet werden und im überlappenden Bereich von Bildsensor und Spektrometer von 1 bis n durchnummeriert sind, dass im Anschluß an den Bildsensor eine Klassifizierungseinrichtung (11) vorgesehen ist, in der die gemessenen Spektren der n Bereiche nach ihrer spektralen Charakteristik klassifiziert und die Bildpunkte einer gleichen Klasse zu Bildbereichen zusammengefaßt werden, dass eine Fit-Modellierungseinrichtung (12) vorgesehen ist, in der unter Annahme eines für die jeweilige Klasse angenommenen Parametersatzes für jede Klasse einerseits ein niedrig aufgelöstes Bildspektrum und andererseits ein hochaufgelöstes Spektrum modelliert wird, dass eine Einrichtung (14) zur Prozessierung des nichtlinearen Least-Square-Fits vorgesehen ist, welche die in der Fit-Modellierungseinrichtung (12) gebildeten Modelle der Spektren der zusammengefaßten Bildbereiche und des Spektrums des Spektrometers an die entsprechenden gemessenen Spektren des Bildsensors bzw. des Spektrometers unter Berücksichtigung einer Gewichtungsmatrix iterativ durch Variation der Klassenparameter simultan bis zur Übereinstimmung anpaßt, und dass an einem ersten Ausgang (15) der Einrichtung (14) zur Prozessierung des nichtlinearen Least-Square-Fits als Ausgangssignal die Verteilung der Konzentrationen und Temperaturen im untersuchten Medium und an einem zweiten Ausgang (16) dieser Einrichtung als Ausgangssignal die Eigenschaften des Hintergrundes anstehen.

**11.** Vorrichtung nach Anspruch 9 oder 10, **dadurch gekennzeichnet, dass** die Einrichtung (14) zur Prozessierung des nichtlinearen Least-Square-Fits noch einen zusätzlichen Eingang zur Eingabe von problemspezifischen Nebenbedingungen (13) aufweist.

**12.** Vorrichtung nach Anspruch 9, **dadurch gekennzeichnet, dass** die Eintrittsoptik (1) der Strahlerfassungseinrichtung so bemessen ist, dass das Gesichtsfeld (7) des Spektrometers (4) etwa gleich groß oder kleiner als das Gesichtsfeld (6) des Bildsensors (3) ist.

**13.** Vorrichtung nach Anspruch 9, 10 oder 12, **dadurch gekennzeichnet, dass** als breitbandiges Spektrometer (4), insbesondere für die Untersuchung von Hochtemperaturereignissen des zu untersuchenden Mediums (9), ein Michelson-Interferometer vorgesehen ist.

**Claims**

**1.** A method for determining the concentration and temperature distributions of any, preferably gaseous, media in which images of low spectral resolution are sensed by means of an image sensor (3) and spectra of high spectral resolution are detected by means of a spectrometer (4) whose field of view (7) is included in the field of view (6) of the image sensor and totally covered by pixels sensed by means of the image sensor, and in which in the overlapping spectral regions of the image sensor and spectrometer the spectral region(s) of the image sensor is/ are extended so that a sensitivity exists therein to parameters which describe the medium being investigated and which simultaneously influence the spectrum of the spectrometer, whereby measured data of the image sensor and spectrometer are combined and analysed by means of an analysis method, **characterized in that** the analysis method with which the measured image data of the image sensor (3) and the spectral data of the spectrometer (4) are combined and analysed consisting of a specification for mapping consecutively numbered the pixels of the overlapping portion of the spectrometer and image sensor field of view (6,7) is undertaken together with a specification for discretization for the wanted parameter profile, after which the measured spectra of the pixels of the image sensor (3) are classified according to their spectral characteristic and pixels of a same class are each combined into image sites, that for each class in assuming a set of parameters assumed for each class an image sensor of low spectral resolution, for one thing, and a spectra of high spectral resolution, for another, is modelled, and that the models of the spectra of the combined image sites and spectrum of the spectrometer are fitted in the sense of a non-linear least squares method to the corresponding measured spectra in taking into account a weighting matrix simultaneously up to agreement, the result then being the concentration and temperature distributions in the medium (9) investigated and the properties of the background (10).

**2.** The method as set forth in claim 1, **characterized in that** ancillary conditions relative to the application are inserted in the least squares method to uniquely associate the solution for poorly set and underdefined least squares problems.

**3.** The method as set forth in claim 1 or 2, **characterized in that** the non-linear least squares method is implemented iteratively by varying the class parameters until the modelled and measured spectra agree in taking into account the noise.

**4.** The method as set forth in any of the preceding claims, **characterized by** an extension to several spectrometer fields of view by implementing each analysis method in sequence to each and every field of view (7) of the spectrometer (4).

**5.** The method as set forth in any of the preceding claims, **characterized by** an extension to the simultaneous treatment of several properties to be determined of the medium (9) to be investigated.

6. The method as set forth in any of the preceding claims, **characterized by** the application of emission measurements, absorption measurements or a combination of both thereof in a medium (9) to be investigated.

7. The method as set forth in any of the preceding claims, **characterized by** it being used for investigating high-temperature events.

8. The method as set forth in any of the preceding claims, **characterized by** a measurement in the infrared spectral region for investigating high-temperature events , whereby the image sensor (3) works roughly in the atmospheric window regions and the spectral region(s) of the image sensor (3) is/are extended so that sensitivity to changes in temperature, carbon monoxide, carbon dioxide and smoke particles exists.

9. A device for implementing the method as set forth in claim 1, **characterized in that** a beam detector including a common receiving lens system (1) and a beam splitter (2) is provided, via which the radiation emitted by a medium being investigated and the radiation transmitted by the background (10) of the medium is split to an image sensor (3) and a spectrometer (4), that the image sensor and spectrometer are adapted to each other so that the field of view (7) of the spectrometer is located in the spatial domain being investigated within the field of view (6) of the image sensor, that the field of view (6) of the image sensor is mapped in squares imaged on the field of view (7) of the spectrometer and are numbered consecutively from 1 to n in the overlapping portion of image sensor and spectrometer, that the image sensor is followed by a classification means (11) in which the measured spectra of the n squares are classified as to their spectral characteristic and the pixels of a same class are grouped together into image sites, that a fit modelling means (12) is provided in which, on the one hand, in assuming a set of parameters assumed for each class a low-resolution image spectrum is modelled and, on the other, a high-resolution spectrum is modelled, that a means (14) for processing the non-linear least squares fits is provided which fits the models formed in the fit modelling means (12) of the spectra of the combined image sites and spectrum of the spectrometer to the corresponding measured spectra of the image sensor or of the spectrometer in taking into account a weighting matrix iteratively by varying the class parameters simultaneously until agreement is attained, and that the distribution of the concentrations and temperatures in the investigated medium is available as the output signal at a first output (15) of the means (14) for processing the non-linear least squares fits and the properties of the background are available at a second output (16) of this means.

10. The device for implementing the method as set forth in claim 1, **characterized in that** a beam detector including a separate receiving lens system for an image sensor (3) and for a spectrometer (4) for detecting the radiation emitted by a medium (9) being investigated and the radiation transmitted by the background (10) of the medium is provided for the image sensor (3) and the spectrometer (4), that the image sensor and spectrometer are adapted to each other so that the field of view (7) of the spectrometer is located in the spatial domain being investigated within the field of view (6) of the image sensor, that the field of view (6) of the image sensor is mapped in squares imaged on the field of view (7) of the spectrometer and are numbered consecutively from 1 to n in the overlapping portion of image sensor and spectrometer, that the image sensor is followed by a classification means (11) in which the measured spectra of the n squares are classified as to their spectral characteristic and the pixels of a same class are grouped together into image sites, that a fit modelling means (12) is provided in which, on the one hand, in assuming a set of parameters assumed for each class a low-resolution image spectrum is modelled and, on the other, a high-resolution spectrum is modelled, that a means (14) for processing the non-linear least squares fits is provided which fits the models formed in the fit modelling means (12) of the spectra of the combined image sites and spectrum of the spectrometer to the corresponding measured spectra of the image sensor or of the spectrometer in taking into account a weighting matrix iteratively by varying the class parameters simultaneously until agreement is attained, and that the distribution of the concentrations and temperatures in the investigated medium is available as the output signal at a first output (15) of the means (14) for processing the non-linear least squares fits and the properties of the background are available at a second output (16) of this means.

11. The device as set forth in claim 9 or 10, **characterized in that** the means (14) for processing the non-linear least squares fits also comprises an additional input for inputting problem-specific ancillary conditions (13).

12. The device as set forth in claim 9, **characterized in that** the receiving lens system (1) of the beam detector is dimensioned so that the field of view (7) of the spectrometer (4) is roughly as large as or smaller than the field of view (6) of the image sensor (3).

13. The device as set forth in claim 9, 10 or 12, **characterized in that** a Michelson interferometer is provided as the wideband spectrometer (4), more particularly for investigating high-temperature events of the medium (9) being investigated.

**Revendications**

1. Procédé pour la détermination des répartitions de concentrations et de températures de n'importe quel milieu, de préférence gazeux, dans lequel des images déclenchées à faible niveau spectral au moyen d'un capteur d'image (3) et des spectres déclenchés à un niveau spectral élevé au moyen d'un spectromètre (4) sont saisis, dont le champ visuel (7) est inclus dans le champ visuel (6) du capteur d'image et se trouve complètement recouvert de points d'image saisis au moyen du capteur d'image, et procédé dans lequel, pour les zones spectrales se chevauchant du capteur d'image et du spectromètre, la zone spectrale ou les zones spectrales du capteur d'image est/sont étendue(s) de telle sorte qu'il existe une sensibilité vis-à-vis des paramètres qui décrivent le milieu à examiner et qui, en même temps, influent sur le spectre du spectromètre, tandis que les données mesurées du capteur d'image et du spectromètre sont rassemblées et analysées au moyen d'un procédé d'évaluation, **caractérisé en ce que** le procédé d'évaluation avec lequel on assemble et analyse les données d'image mesurée du capteur d'image (3) et les données spectrales du spectromètre (4) consiste **en ce que** l'on procède à l'établissement d'une prescription pour la répartition de points d'image et la numérotation de points d'image de la zone en chevauchement du champ visuel de capteur d'image et de spectromètre (6, 7) conjointement avec une prescription de discrétisation pour le profil de paramètre recherché, **en ce que** consécutivement les spectres mesurés des points d'image du capteur d'image (3) sont classés selon leurs caractéristiques spectrales et les points d'image d'une même classe sont respectivement regroupés en zones d'images, **en ce que** pour chaque classe on procède à une modélisation en partant d'un jeu de paramètres admis pour la classe respective pour un spectre d'image à déclenchement bas niveau et pour un autre spectre d'image à déclenchement haut niveau, et **en ce que** les modèles des spectres des zones d'images rassemblées et du spectre du spectromètre sont adaptés selon une méthode Least-Squares-Fit (méthode des plus petits carrés) non linéaire aux spectres mesurés correspondants en tenant compte d'une matrice de pondération simultanément jusqu'à la concordance, tandis qu'ensuite le résultat est constitué par la répartition des concentrations et les températures dans le milieu examiné (9) et les propriétés de l'arrière-plan (10).

2. Procédé selon la revendication 1, **caractérisé en ce que** l'on introduit des conditions auxiliaires rapportées à l'application dans la méthode des plus petits carrés Least-Squares-Fit pour obtenir la solution sans équivoque lors de problèmes Least-Squares mal posés et sous-déterminés.

3. Procédé selon la revendication 1 ou 2, **caractérisé en ce que** la méthode des plus petits carrés Least-Squares-Fit non linéaire est exécutée de façon itérative par variation des paramètres de classe jusqu'à ce que les spectres modélisés et mesurés coïncident compte tenu du bruit.

4. Procédé selon l'une des revendications précédentes, **caractérisé par** un élargissement sur plusieurs champs visuels de spectromètre par l'exécution consécutive du procédé d'évaluation sur chaque champ visuel individuel (7) du spectromètre (4).

5. Procédé selon l'une des revendications précédentes, **caractérisé par** un élargissement au traitement simultané de plusieurs propriétés à déterminer du milieu à examiner (9).

6. Procédé selon l'une des revendications précédentes, **caractérisé par** l'application à des mesures d'émission, à des mesures d'absorption ou à une combinaison des deux mesures précitées pour un milieu à examiner (9).

7. Procédé selon l'une des revendications précédentes, **caractérisé par** l'utilisation pour l'examen d'événements à température élevée.

8. Procédé selon la revendication 7, **caractérisé par** une mesure dans la zone spectrale infrarouge pour l'examen d'événements à haute température, tandis que le capteur d'image (3) travaille sensiblement dans les zones de fenêtres atmosphériques et la/les zone(s) spectrale(s) du capteur d'image (3) est/sont étendue(s) de telle sorte qu'il existe une sensibilité vis-à-vis de la température, du monoxyde de carbone, du dioxyde de carbone et des particules de fumée.

9. Dispositif pour l'exécution du procédé selon la revendication 1, **caractérisé en ce qu'**il est prévu un dispositif de saisie de rayonnement avec une optique d'entrée commune (1) et un diviseur de rayon (2), par lequel le rayonnement émis d'un milieu à examiner (9) et le rayonnement transmis de l'arrière-plan (10) du milieu est réparti sur un capteur d'image (3) et un spectromètre (4), **en ce que** le capteur d'image et le spectromètre sont accordés entre eux de telle sorte que le champ visuel (7) du spectromètre dans la zone spatiale à examiner se situe à l'intérieur du champ visuel (6) du capteur d'image, **en ce que** le champ visuel (6) du capteur d'image est divisé en zones rectangulaires qui sont représentées sur le champ visuel (7) du spectromètre et dans la zone de chevauchement du capteur d'image et sont numérotées dans la zone de chevauchement du capteur d'image et du spectromètre de 1 à n, **en ce qu'**en liaison au capteur d'image il est prévu un dispositif de classification (11) dans lequel les spectres mesurés des n zones sont classés selon leurs caractéristiques spectrales et les points d'images d'une même classe sont rassemblés en zones d'images, **en ce qu'**un dispositif de modélisation Fit (12) est prévu, dans lequel, en partant d'un jeu de paramètres admis pour la classe respective pour chaque classe, d'une part, on modélise un spectre d'image déclenchée à bas niveau et, d'autre part, un spectre déclenché à haut niveau, **en ce qu'**un dispositif (14) est prévu pour le traitement des plus petits carrés Least-Square-Fits non linéaires, qui adapte les modèles formés dans le dispositif de modélisation Fit (12) des spectres des zones d'images rassemblées et du spectre du spectromètre, de façon itérative aux spectres mesurés correspondants du capteur d'image ou du spectromètre, en tenant compte d'une matrice de pondération par variation des paramètres de classe simultanément jusqu'à la concordance, et **en ce que** sur une première sortie (15) du dispositif (14) pour le traitement de la méthode des plus petits carrés Least-Squares-Fit non linéaire en tant que signal de sortie, apparaît la répartition des concentrations et des températures dans le milieu examiné, et sur une seconde sortie (16) de ce dispositif apparaissent les propriétés de l'arrière-plan en tant que signal de sortie.

10. Dispositif pour la réalisation du procédé selon la revendication 1, **caractérisé en ce qu'**un dispositif de saisie de rayonnement est prévu avec respectivement une optique d'entrée propre pour un capteur d'image (3) et pour un spectromètre (4) pour la saisie du rayonnement émis d'un milieu à examiner (9) et du rayonnement transmis de l'arrière-plan (10) du milieu pour le capteur d'image (3) ou le spectromètre (4), **en ce que** le capteur d'image et le spectromètre sont accordés l'un à l'autre de telle sorte que le champ visuel (7) du spectromètre se situe dans la zone spatiale à examiner à l'intérieur du champ visuel (6) du capteur d'image, **en ce que** le champ visuel (6) du capteur d'image est divisé en zones rectangulaires qui sont représentées sur le champ visuel (7) du spectromètre et dans la zone en chevauchement du capteur d'image et du spectromètre, sont numérotées de 1 jusqu'à n, **en ce qu'**en liaison au capteur d'image il est prévu un dispositif de classification (11), **en ce que** les spectres mesurés des zones n sont classés selon leurs caractéristiques spectrales et les points d'image d'une classe identique sont rassemblés en zones d'images, **en ce qu'**il est prévu un dispositif de modélisation (12), dans lequel, en partant d'un jeu de paramètres acceptés pour la classe respective pour chaque classe, d'une part, il est modélisé un spectre d'image déclenché à niveau bas et, d'autre part, un spectre déclenché à niveau élevé, **en ce qu'**un dispositif (14) est prévu pour le traitement de la méthode des plus petits carrés Least-Square-Fit non linéaire qui adapte les modèles formés dans le dispositif de modélisation Fit (12) des spectres des zones d'images rassemblées et du spectre du spectromètre aux spectres mesurés correspondants du capteur d'image ou du spectromètre en tenant compte d'une matrice de pondération de façon itérative par variation des paramètres de classe simultanément jusqu'à la concordance, et **en ce que**, sur une première sortie (15) du dispositif (14) pour le traitement de la méthode des plus petits carrés Least-Square-Fit non linéaire en tant que signal de sortie, apparaît la répartition des concentrations et des températures dans le milieu examiné, et sur la seconde sortie (16) de ce dispositif apparaissent en tant que signal de sortie les propriétés de l'arrière-plan.

11. Dispositif selon les revendications 9 ou 10, **caractérisé en ce que** le dispositif (14) pour le traitement de la méthode des plus petits carrés Least-Square-Fit non linéaire présente encore une entrée supplémentaire pour l'introduction de conditions auxiliaires spécifiques aux problèmes (13).

12. Dispositif selon la revendication 9, **caractérisé en ce que** l'optique d'entrée (1) du dispositif de saisie de rayonnement est dimensionnée de telle sorte que le champ visuel (7) du spectromètre(4) est sensiblement de même grandeur ou inférieur au champ visuel (6) du capteur d'image (3).

13. Dispositif selon la revendication 9, 10 ou 12, **caractérisé en ce qu'**en tant que spectromètre à large bande (14), notamment pour l'examen d'événements haute température du milieu à examiner (9), il est prévu un interféromètre Michelson.

Fig.1

Fig.2

EP 1 004 861 B1

Fig.3

Bildsensor — 3

Spektrum 1
Spektrum 2
Spektrum 3
Spektrum n

Spektrometer — 4

Spektrum

Problemspezifische
Nebenbedingungen — 13

Klassifikation — 11

Fitmodelle — 12

Bildsensor

Spektrometer

Spektrum 1
Klasse 1

Spektrum 2
Klasse 2

Spektrum K
Klasse K

Nichtlinearer Least-Squares-Fit mit Nebenbedingungen — 14

Eigenschaften des
Mediums

Konzentrationen

Temperaturen — 15

Hintergrundeigenschaften — 16

Fig.4

EP 1 004 861 B1